(19) Europäisches Patentamt / European Patent Office / Office européen des brevets

(11) **EP 3 065 252 B1**

(12) **FASCICULE DE BREVET EUROPEEN**

(45) Date de publication et mention
de la délivrance du brevet:
**13.09.2017 Bulletin 2017/37**

(51) Int Cl.:
*H02J 5/00* *(2016.01)*          *B60L 11/18* *(2006.01)*
*H02J 7/02* *(2016.01)*          *H02J 50/12* *(2016.01)*

(21) Numéro de dépôt: **16151001.1**

(22) Date de dépôt: **13.01.2016**

(54) **DISPOSITIF ET SYSTÈME D'ALIMENTATION D'UNE CHARGE SANS CONTACT**

STROMZUFÜHRUNGSVORRICHTUNG UND -SYSTEM FÜR EINE KONTAKTLOSE AUFLADUNG

DEVICE AND SYSTEM FOR CONTACTLESS POWER SUPPLY OF A LOAD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **04.03.2015 FR 1551802**

(43) Date de publication de la demande:
**07.09.2016 Bulletin 2016/36**

(73) Titulaire: **Salvi, Charles
38000 Grenoble (FR)**

(72) Inventeur: **Salvi, Charles
38000 Grenoble (FR)**

(74) Mandataire: **Cabinet Camus Lebkiri
25 rue de Maubeuge
75009 Paris (FR)**

(56) Documents cités:
**EP-A1- 2 722 967          WO-A2-2013/117973
FR-A1- 2 998 427          US-A1- 2011 254 379
US-A1- 2012 306 262       US-A1- 2013 015 699
US-A1- 2013 335 015**

• **ARISAKA S ET AL: "DEVELOPMENT OF THE
INDUCTIVE CHARGING CONNECTOR", EVS - 13.
13TH. INTERNATIONAL ELECTRIC VEHICLE
SYMPOSIUM. OSAKA, OCT. 13 - 16, 1996.
SESSIONS 1A - 4H; [EVS. INTERNATIONAL
ELECTRIC VEHICLE SYMPOSIUM], TOKYO,
JEVA, JP, vol. SYMP. 13, 13 octobre 1996
(1996-10-13), pages 545-549, XP000687919,**

**EP 3 065 252 B1**

**Description**

**DOMAINE TECHNIQUE**

La présente invention concerne un dispositif et un système d'alimentation sans contact d'une charge, et en particulier d'une charge d'un véhicule électrique. La présente invention concerne également un dispositif de commande de la puissance transmise dans un système d'alimentation sans contact. La présente invention concerne également des procédés de contrôle de la puissance transmise via ce système de charge.

**ETAT DE LA TECHNIQUE ANTERIEUR**

L'art antérieur connait de nombreux systèmes permettant de charger sans contact la batterie d'un véhicule électrique.

Ainsi, le document FR2998427 décrit un système de charge sans contact d'une batterie d'un véhicule automobile en mouvement comportant :

- Au moins deux modules de bobines comprenant chacun une bobine primaire disposée dans un tronçon de route empruntable par le véhicule et apte à transférer de l'énergie par induction à une bobine secondaire connectée à la batterie du véhicule automobile et au moins deux cellules de commutation pour raccorder chacune au moins une bobine primaire à un bus d'alimentation relié en entrée au réseau électrique et en sortie auxdits au moins deux modules de bobine,
- Une unité de commande électronique apte à commander les cellules de commutation de sorte qu'au moins deux bobines primaires soient alimentées simultanément, en fonction de la position du véhicule automobile,
- Une bobine primaire présentant une dimension dans une direction de déplacement

Le document FR2947114 décrit également un système de charge sans contact d'une batterie d'un véhicule électrique comprenant une bobine primaire apte à transmettre une puissance sans contact vers une bobine secondaire, dans lequel la bobine primaire comprend une surface supérieure ou égale à 0,4 mètre carré.

Ces systèmes de charge sans contact permettent bien de remédier au problème de la faible autonomie des véhicules électriques en les rechargeant pendant qu'ils roulent.

Toutefois, en l'absence de batterie de véhicule à recharger, le courant débité à travers la bobine primaire est maximum alors qu'aucune énergie n'est transférée. Ces systèmes nécessitent donc des moyens permettant de détecter si une batterie à recharger est présente ou non, ce qui les complique. En outre, la présence de la bobine secondaire a tendance à augmenter l'impédance vue par le générateur et donc à limiter le courant dans la bobine primaire, ce qui limite la puissance transférée à la batterie.

**EXPOSE DE L'INVENTION**

L'invention vise à remédier aux inconvénients de l'état de la technique en proposant un dispositif de charge sans contact d'une batterie d'un véhicule électrique qui soit plus simple que les dispositifs de l'art antérieur, moins consommateur en énergie, et qui permette d'optimiser et de contrôler la puissance transmise par induction de la bobine primaire à la bobine secondaire.

Pour ce faire, un premier aspect de l'invention concerne un dispositif d'alimentation sans contact d'une charge d'un véhicule, le dispositif comportant un circuit primaire comportant :

- une bobine primaire agencée pour transférer par induction de l'énergie à une bobine secondaire reliée à la charge,
- une capacité primaire reliée à la bobine primaire,
- une alimentation électrique apte à émettre un courant primaire, la bobine primaire étant reliée à l'alimentation électrique de façon à former un autotransformateur.

Un autotransformateur est un transformateur dont au moins deux enroulements ont une partie commune. Un autotransformateur comporte donc un sous enroulement primaire et un sous enroulement secondaire. Pour former un autotransformateur, une des bornes de l'alimentation électrique est reliée à une des spires de la bobine primaire au lieu d'être reliée à une des bornes de la bobine primaire. Le point auquel est relié la borne de l'alimentation électrique est appelé « point intermédiaire ». En effet, si on considère que la bobine primaire comporte une première et une deuxième borne d'extrémité, alors l'alimentation électrique est reliée à la bobine primaire de façon à ce que :

- une première différence de potentiel soit appliquée entre la première et la deuxième borne de la bobine primaire ;

- une deuxième différence de potentiel soit appliquée entre la première borne de la bobine primaire et le point intermédiaire , le point intermédiaire étant situé entre la première et la deuxième bornes de la bobine primaire, la deuxième différence de potentiel étant égale à une fraction de la première différence de potentiel.

Le fait de former un autotransformateur permet de créer dans la bobine primaire deux champs électromagnétiques opposés : ainsi un premier champ électromagnétique est créé dans le sous enroulement primaire formé entre la première extrémité de la bobine primaire et le point intermédiaire à laquelle est reliée l'alimentation électrique. Ce premier champ électromagnétique génère un courant induit dans le sous enroulement primaire, ce qui génère un deuxième champ électromagnétique dans le sous enroulement secondaire formé entre la deuxième extrémité de la bobine primaire et le point intermédiaire à laquelle est reliée l'alimentation électrique. Le deuxième champ électromagnétique s'oppose au premier champ électromagnétique de sorte qu'il élève l'impédance vue par l'alimentation électrique. Ainsi, en l'absence de bobine secondaire à proximité de la bobine primaire, le premier champ électromagnétique génère une force contre électromotrice qui réduit fortement dans la bobine primaire la tension apparente de l'alimentation électrique, donc le courant débité. Ainsi, tant qu'il n'y a pas de bobine secondaire à proximité de la bobine primaire, il y a peu de courant qui traverse la bobine primaire. La bobine primaire peut donc rester connectée à l'alimentation électrique en l'absence de bobine secondaire sans qu'un courant primaire significatif soit débité. Au contraire, lorsqu'une bobine secondaire s'approche de la bobine primaire, il y a couplage électromagnétique entre cette bobine secondaire et la bobine primaire de sorte que l'alimentation électrique débite un courant primaire dans la bobine primaire, ce qui permet de transférer par induction de l'énergie à la charge reliée à la bobine secondaire.

Le premier aspect de l'invention concerne également un dispositif d'alimentation sans contact d'une charge, le dispositif comportant un circuit primaire comportant :

- une bobine primaire agencée pour transférer par induction de l'énergie à une bobine secondaire reliée à la charge, la bobine primaire comportant un point intermédiaire situé entre une première et une deuxième borne de la bobine primaire,
- une capacité primaire reliée en série à la bobine primaire,
- une alimentation électrique apte à émettre un courant primaire, l'alimentation électrique comportant une première borne et un point neutre,

dans lequel la première borne de l'alimentation électrique est reliée au point intermédiaire de la bobine primaire par l'intermédiaire d'un condensateur d'entrée de façon à former un autotransformateur et en ce que la deuxième borne de la bobine primaire est reliée au point neutre.

Le dispositif selon le premier aspect de l'invention peut également présenter une ou plusieurs des caractéristiques ci-après prises individuellement ou selon toutes les combinaisons techniquement possibles.

La capacité primaire comporte une première borne reliée à la première borne de la bobine primaire et une deuxième borne reliée à la deuxième borne de la bobine primaire.

Avantageusement, l'alimentation électrique est configurée de façon à ce que le courant primaire soit alternatif de forme carrée ou rectangulaire ce qui permet de limiter les pertes entre l'alimentation électrique et la bobine primaire. On peut ainsi avoir un très fort niveau de puissance dans la bobine primaire.

Pour cela, l'alimentation électrique comporte de préférence:

- une alimentation continue ;
- un oscillateur ;
- un hacheur.

Une telle alimentation électrique présente un très bon rendement.

Avantageusement, le point intermédiaire de la bobine primaire est reliée à l'alimentation électrique par l'intermédiaire d'un condensateur d'entrée.

Avantageusement, la deuxième borne de la bobine primaire est reliée à un point neutre.

Selon différents modes de réalisation :

- la bobine primaire peut comporter une seule spire. Dans ce cas, le point intermédiaire est un point de cette spire ;
- la bobine primaire peut comporter plusieurs spires. Dans ce cas, le point intermédiaire est un point d'une des spires.

Selon un mode de réalisation, l'alimentation électrique est configurée de façon à ce que le courant primaire présente une fréquence égale à la fréquence de résonnance du circuit primaire. En effet, lorsque le couplage entre la bobine primaire et la bobine secondaire est parfait, la fréquence du courant primaire est de préférence égale à la fréquence de résonnance du circuit primaire de façon à maximiser le rendement du transfert de puissance entre le circuit primaire et le circuit secondaire.

Selon un mode de réalisation, la fréquence du courant primaire peut être choisie de façon à optimiser le rendement de transmission de puissance entre le circuit primaire et le circuit secondaire malgré le fait que le couplage entre la bobine primaire et la bobine secondaire n'est pas parfait. En effet, le choix de la fréquence est important.

En effet, comme on le verra dans la suite, il est possible de compenser le fait que le couplage entre le circuit primaire et le circuit secondaire n'est pas parfait, en augmentant la fréquence du courant primaire. On peut ainsi maintenir un bon rendement lors du transfert de puissance entre le circuit primaire et le circuit secondaire en augmentant la fréquence du courant primaire de manière à compenser un mauvais couplage entre la bobine primaire et la bobine secondaire, par exemple parce que ces deux bobines ne sont pas parfaitement parallèles ou qu'elles ne sont pas situées à une distance optimale.

Avantageusement, la bobine primaire est disposée dans un tronçon de route empruntable par le véhicule.

Selon un mode de réalisation préférentiel, le dispositif d'alimentation comporte deux bobines primaires concentriques situées de part et d'autre d'un tronçon de route empruntable par le véhicule. Les deux bobines primaires sont alors parcourues de préférence par deux courants primaires qui circulent dans des sens opposés. On créé ainsi une zone au niveau du tronçon de route empruntable par le véhicule dans laquelle le champ électromagnétique créé est maximum puisqu'il est égal à la somme du champ électromagnétique créé par la première bobine primaire et du champ électromagnétique créé par la deuxième bobine primaire, tandis qu'au centre de la deuxième bobine primaire, le champ électromagnétique créé est nul.

Le dispositif d'alimentation peut être utilisé pour charger une batterie d'un véhicule électrique ou alors pour alimenter un moteur électrique de ce véhicule.

Un deuxième aspect de l'invention concerne un système d'alimentation sans contact d'une charge, le système d'alimentation comportant :

- un dispositif d'alimentation selon le premier aspect de l'invention,
- un circuit secondaire relié à la charge, le circuit secondaire comportant une capacité secondaire et une bobine secondaire, le circuit secondaire étant accordé en fréquence avec le circuit primaire.

Le circuit secondaire présente donc une fréquence de résonnance égale à la fréquence de résonnance du circuit primaire. Comme expliqué précédemment, ce système d'alimentation est particulièrement avantageux car seul un courant de fuite circule dans le circuit primaire lorsque le circuit primaire et le circuit secondaire sont à une distance supérieure à une distance seuil. Au contraire, lorsque le circuit secondaire et le circuit primaire sont à une distance inférieure à la distance seuil, il y a couplage entre le circuit primaire et le circuit secondaire de sorte qu'un courant primaire circule dans le circuit primaire, ce qui permet un transfert de puissance par induction du circuit primaire au circuit secondaire.

Avantageusement, le système d'alimentation comporte en outre un dispositif de commande de la puissance transférée par le dispositif d'alimentation à la charge, le dispositif de commande comportant un circuit tertiaire comportant une capacité tertiaire et une bobine tertiaire, le circuit tertiaire présentant une fréquence de résonnance tertiaire égale à la fréquence de résonnance primaire. Le circuit tertiaire permet de modifier le couplage entre le circuit primaire et le circuit secondaire et donc la puissance transmise par le circuit primaire au circuit secondaire.

Avantageusement, la bobine tertiaire est disposée par rapport à la bobine secondaire à une distance initiale telle que lorsque la bobine tertiaire et la bobine secondaire sont parallèles et que le circuit tertiaire est fermé, le champ électromagnétique émis par la bobine primaire dans le circuit secondaire est annulé.

Le circuit tertiaire permet de réguler la puissance transmise du circuit primaire au circuit secondaire. En effet, lorsque :

- le circuit tertiaire est fermé et que
- la bobine tertiaire est parallèle à la bobine secondaire et que
- la bobine tertiaire se trouve à une distance de référence de la bobine secondaire,

alors le circuit tertiaire créé un champ électromagnétique qui s'oppose au champ électromagnétique créé par le circuit secondaire, ce qui permet d'annuler le champ électromagnétique apparent au niveau de la bobine secondaire. On arrête alors la transmission de puissance entre le circuit primaire et le circuit secondaire. En d'autres termes, lorsque le circuit tertiaire est couplé au circuit secondaire, le circuit tertiaire permet d'approcher la charge du dispositif d'alimentation sans qu'il y ait transmission de puissance du circuit primaire au circuit secondaire.

Au contraire :

- en ouvrant le circuit tertiaire et/ou bien
- en tournant la bobine tertiaire par rapport à la bobine secondaire ; et/ou

- en éloignant la bobine tertiaire par rapport à la bobine secondaire et/ou
- en augmentant la résistance du circuit tertiaire,

On modifie le couplage entre le circuit primaire et le circuit secondaire de façon à augmenter la puissance transmise du circuit primaire au circuit secondaire.

Avantageusement, le circuit tertiaire comporte des moyens de commande de l'inclinaison de la bobine tertiaire par rapport à la bobine secondaire, les moyens de commande étant aptes à incliner la bobine tertiaire par rapport à la bobine secondaire entre une position dans laquelle la bobine tertiaire est parallèle à la bobine secondaire et une position dans laquelle la bobine tertiaire est perpendiculaire à la bobine secondaire. Les moyens de commande de l'inclinaison de la bobine tertiaire par rapport à la bobine secondaire permettent donc de commander la puissance transmise du circuit primaire au circuit secondaire.

Selon un mode de réalisation, le circuit tertiaire comporte en outre des moyens d'ouverture aptes à ouvrir ou fermer le circuit tertiaire. Lorsque le circuit tertiaire est ouvert, le circuit primaire transmet de la puissance au circuit secondaire. Au contraire, lorsque le circuit tertiaire est fermé, le circuit tertiaire empêche la transmission de puissance du circuit primaire vers le circuit secondaire.

Selon un mode de réalisation, le circuit tertiaire comporte :

- une résistance variable reliée en série à la bobine tertiaire et à la capacité tertiaire et
- des moyens de commande de la résistance variable.

En effet, on peut modifier la puissance transmise par le circuit primaire au circuit secondaire en modifiant la résistance du circuit tertiaire.

Avantageusement, le circuit secondaire est disposé sur un véhicule.

Avantageusement, le circuit tertiaire est également disposé sur le véhicule.

Un troisième aspect de l'invention concerne un dispositif de commande de la puissance transférée par un dispositif d'alimentation sans contact à une charge, le dispositif d'alimentation comportant un circuit primaire comportant :

- une bobine primaire,
- une capacité primaire,
- une alimentation électrique apte à émettre un courant primaire,
- la bobine primaire étant reliée à l'alimentation électrique de façon à former un autotransformateur,

un circuit secondaire étant relié à une charge du véhicule électrique, le circuit secondaire comportant une capacité secondaire et une bobine secondaire, le circuit secondaire étant accordé en fréquence avec le circuit primaire, le dispositif de commande comportant un circuit tertiaire comportant:

- une bobine tertiaire;
- une capacité tertiaire,

le circuit tertiaire présentant une fréquence de résonnance égale à la fréquence de résonnance du circuit primaire.

Le dispositif de commande permet de réguler la puissance transmise du circuit primaire au circuit secondaire en modifiant le couplage entre le circuit secondaire et le circuit tertiaire.

Le dispositif de commande peut également comporter une ou plusieurs des caractéristiques ci-après prises indépendamment ou selon toutes les combinaisons techniquement possibles.

Avantageusement, le dispositif de commande comporte des moyens de commande de l'inclinaison de la bobine tertiaire par rapport à la bobine secondaire, les moyens de commande étant aptes à incliner la bobine tertiaire par rapport à la bobine secondaire entre une position dans laquelle la bobine tertiaire est parallèle à la bobine secondaire et une position dans laquelle la bobine tertiaire est perpendiculaire à la bobine secondaire. Les moyens de commande de l'inclinaison de la bobine tertiaire par rapport à la bobine secondaire permettent donc de commander la puissance transmise du circuit primaire au circuit secondaire.

Selon un mode de réalisation, le dispositif de commande comporte en outre des moyens d'ouverture aptes à ouvrir et fermer le circuit tertiaire. Lorsque le circuit tertiaire est ouvert, le circuit primaire transmet de la puissance au circuit secondaire. Au contraire, lorsque le circuit tertiaire est fermé, le circuit tertiaire empêche la transmission de puissance du circuit primaire vers le circuit secondaire.

Selon un mode de réalisation, le circuit tertiaire comporte une résistance variable reliée en série à la bobine tertiaire et à la capacité tertiaire, le dispositif de commande comportant des moyens de commande de la résistance variable. En effet, on peut modifier la puissance transmise par le circuit primaire au circuit secondaire en modifiant la résistance du circuit tertiaire.

Un quatrième aspect de l'invention concerne un procédé de contrôle de la puissance transmise par le circuit primaire au circuit secondaire d'un système d'alimentation selon le deuxième aspect de l'invention, le procédé comportant une étape de contrôle de la fréquence du courant primaire en fonction du couplage entre la bobine primaire et la bobine secondaire de façon à maintenir constant un rendement de couplage entre le circuit primaire et le circuit secondaire. Ainsi, on peut avoir un bon rendement même si la bobine primaire n'est pas parfaitement couplée avec la bobine secondaire.

Un cinquième aspect de l'invention concerne un procédé de contrôle de la puissance transmise par le circuit primaire au circuit secondaire d'un système d'alimentation selon le deuxième aspect de l'invention, le procédé comportant une étape de contrôle de l'angle d'inclinaison entre la bobine tertiaire et la bobine secondaire.

Un sixième aspect de l'invention concerne un procédé de contrôle de la puissance transmise par le circuit primaire au circuit secondaire d'un système de charge selon le deuxième aspect de l'invention, le procédé comportant une étape de contrôle de la résistance du circuit tertiaire.

## BREVES DESCRIPTION DES FIGURES

D'autres caractéristiques et avantages de l'invention ressortiront à la lecture de la description détaillée qui suit, en référence aux figures annexées, qui illustrent :

- La figure 1, une représentation schématique d'un dispositif d'alimentation selon un mode de réalisation de l'invention ;
- La figure 2, une vue de dessus du dispositif d'alimentation de la figure 1 ;
- La figure 3, une représentation schématique d'un système d'alimentation selon un mode de réalisation de l'invention ;
- La figure 4, une vue de dessus du système d'alimentation de la figure 3 ;
- La figure 5, une modélisation du système d'alimentation de la figure 3 lorsque la bobine primaire et la bobine secondaire sont couplées ;
- La figure 6, une représentation schématique d'un système d'alimentation selon un autre mode de réalisation de l'invention ;
- La figure 7, une représentation schématique d'un système d'alimentation selon un autre mode de réalisation de l'invention ;
- La figure 8, une représentation schématique d'un système d'alimentation selon un autre mode de réalisation de l'invention.

Pour plus de clarté, les éléments identiques ou similaires sont repérés par des signes de références identiques sur l'ensemble des figures.

## DESCRIPTION DETAILLEE D'AU MOINS UN MODE DE REALISATION

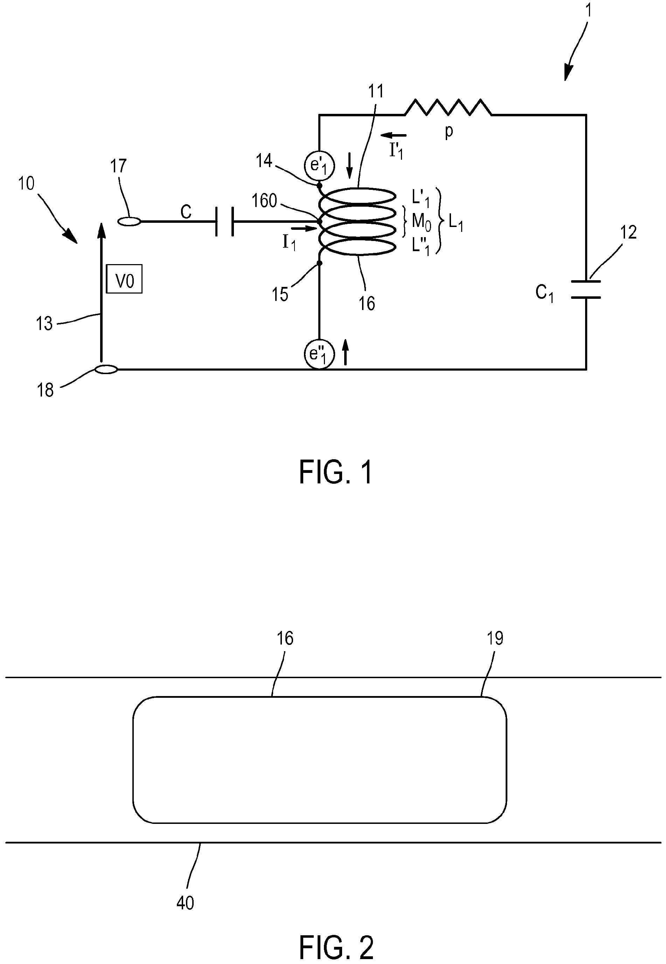

La figure 1 représente un dispositif d'alimentation 1 selon un mode de réalisation de l'invention.

Ce dispositif d'alimentation comporte un circuit primaire 10 comportant une bobine primaire 11 agencée pour transférer par induction de l'énergie à une bobine secondaire d'un véhicule électrique. La surface de la bobine primaire 11, sa forme, son nombre de spires, le diamètre des fils qui la constituent, la tension d'alimentation, dépendent de la puissance que l'on souhaite transmettre avec le dispositif et de la fréquence que l'on souhaite utiliser. Toutefois, la bobine primaire 11 est de préférence dimensionnée de façon à ce que l'intensité du champ électromagnétique émis par la bobine primaire soit inférieure à un champ électromagnétique limite. Ce champ électromagnétique limite correspond au champ électromagnétique maximum pour garantir la sécurité des utilisateurs. Ce champ électromagnétique limite peut par exemple être celui défini dans la directive européenne 2013/35/UE.

Selon un mode de réalisation, la bobine primaire 11 comporte de préférence au moins deux spires, et de manière plus préférentielle au moins trois spires.

Comme représenté sur la figure 2, les spires sont superposées de façon à former une boucle d'émission 19. La boucle d'émission 19 est disposée dans un tronçon de route 40 empruntable par un véhicule. La boucle d'émission 19 s'étend parallèlement au tronçon de route 40 empruntable par le véhicule. Selon un mode de réalisation, la bobine primaire 11 peut-être insérée dans des rainures usinées dans un revêtement existant ou moulé lors du goudronnage de la route. La surface de la bobine primaire 11 dépend de la puissance que l'on souhaite transmettre. Pour des puissances de l'ordre de 150 à 300W, la bobine primaire 11 forme d'une boucle d'émission 19 présentant une surface comprise entre 3 et 10 m$^2$, de préférence égale à 6 m$^2$. La boucle d'émission 19 peut avoir différentes formes et notamment une forme soit rectangulaire, soit carrée, soit circulaire.

Le circuit primaire 10 comporte également une alimentation électrique 13 apte à émettre un courant primaire $I_1$. L'alimentation électrique 13 est reliée à la bobine primaire 11 de façon à former un autotransformateur.

Pour cela, la bobine primaire 11 comporte une première borne 14 et une deuxième borne 15. Entre la première borne 14 et la deuxième borne 15, la bobine primaire 11 comporte au moins une spire 16, de préférence plusieurs. L'alimentation électrique 13 comporte également une première borne 17 et une deuxième borne 18. La première borne 17 de l'alimentation électrique est reliée à une partie de la spire lorsqu'il n'y a qu'une spire ou à une spire située entre les deux bornes de la bobine primaire lorsqu'il y a plusieurs spires. Le point auquel est relié la première borne de l'alimentation électrique est appelé « point intermédiaire ». La première borne 17 de l'alimentation électrique est reliée au point intermédiaire par l'intermédiaire d'un condensateur C. La deuxième borne 18 de l'alimentation électrique, qui correspond à un point neutre, est reliée à la deuxième borne 15 de la bobine primaire 11. Ainsi, la bobine primaire comporte deux sous enroulements :

- un premier sous enroulement L1' constitué par la portion ou les spires comprises entre la première borne 14 de la bobine primaire et le point intermédiaire 160 relié à la première borne 17 de l'alimentation électrique ;
- un deuxième sous enroulement L1" constitué par la portion de spire ou les spires comprises entre le point intermédiaire 160 relié à la première borne 17 de l'alimentation électrique et la deuxième borne 15 de la bobine primaire.

Le circuit primaire 10 comporte également une capacité primaire 12 reliée à la bobine primaire 11. Plus précisément, la capacité primaire 12 comporte une première borne reliée à la première borne 14 de la bobine primaire 11 et une deuxième borne 15 reliée à la deuxième borne 15 de la bobine primaire 11. La capacité primaire 12 est donc reliée en série à la bobine primaire 11. La capacité primaire 12 présente une capacité C1. Le circuit primaire 10 présente une fréquence de résonnance f1, appelée dans la suite « fréquence de résonnance primaire » f1.

L'alimentation électrique 13 est configurée de façon à émettre un courant $I_1$ alternatif, de préférence de forme carrée ou rectangulaire. Pour cela, l'alimentation électrique 13 peut par exemple comporter :

- une alimentation continue ;
- un oscillateur ;
- un hacheur.

Le dispositif d'alimentation 1 est particulièrement avantageux car il permet de ne débiter qu'un très faible courant en l'absence de circuit secondaire proche de lui. Au contraire, dès qu'un circuit secondaire s'approche de lui à une distance inférieure à une distance seuil, un courant $I_1$ est débité et permet de transférer par induction de la puissance au circuit secondaire.

En effet, le calcul ci-après démontre que le courant $I_1$ est négligeable en l'absence de circuit secondaire à proximité du circuit primaire :

$$I_1 = \frac{V_0 - e_1}{j\omega L_{1''}}$$

$$I_{1'} = \frac{-(V_0 + e_{1'})}{j\omega L_{1'} + \dfrac{1}{J\omega C_1} + \rho}$$

Dans lequel :

$V_0$ représente la tension émise par l'alimentation électrique ;

$e_{1'}$ représente la force contre électromotrice générée dans le premier sous enroulement primaire compris entre la première borne 14 de la bobine primaire et la spire 160 reliée à la première borne 17 de l'alimentation électrique. $e_{1'}$ est donné par :

$$e_{1'} = -j\omega M_0 I_1$$

$e_1"$ représente le force électromotrice générée dans le deuxième sous enroulement compris entre la spire 160 reliée à la première borne 17 de l'alimentation électrique et la deuxième borne 15 de la bobine primaire. $e_{1"}$ est donné par :

$$e_{1"} = -j\omega M_O I_{1'}$$

$\omega$ représente la pulsation ($\omega=2\pi F$) du courant primaire émis par l'alimentation primaire

$M_0$ représente l'inductance mutuelle entre le premier sous enroulement L1' et le deuxième sous enroulement L1".

$\rho$ représente la résistance ohmique de la boucle d'émission 19 formée par la bobine primaire et de laquelle de l'énergie est transférée par induction.

On en déduit :

$$I_1 = \frac{V_0(j\omega L_{1'} + \frac{1}{J\omega C_1} + \rho - J\omega M_0)}{J\omega L_{1"}\left(j\omega L_{1'} + \frac{1}{J\omega C_1} + \rho\right) + \omega^2 M_0^2}$$

$$I_1 = \frac{V_0(j\omega L_{1'} + \frac{1}{J\omega C_1} + \rho - J\omega M_0)}{J\omega L_{1"}\left(j\omega L_{1'} + \frac{1}{J\omega C_1} + \rho\right) + \omega^2 M_0^2}$$

$$I_1 = \frac{V_0(j\omega(L_{1'} - M_0) + \frac{1}{J\omega C_1} + \rho)}{J\omega L_{1"}\left(\frac{1}{J\omega C_1} + \rho\right)}$$

Si

$$j\omega(L_{1'} - M_0) + \frac{1}{J\omega C_1} = 0$$

et et

$$\frac{L_{1"}}{C_1} \gg j\omega L_{1"}\rho$$

On obtient alors:

$$I_1 = \frac{V_0 . \rho . C_1}{L_{1"}}$$

Le courant $I_1$ calculé est le courant primaire débité par l'alimentation électrique 13. Comme on peut le voir dans cette formule, le courant primaire $I_1$ augmente proportionnellement selon la valeur de $\rho$ de la boucle d'émission 19 formée par la bobine primaire. En l'absence de $\rho$ dans la boucle d'émission 19, le courant $I_1$ est complètement égal à 0. Mais $\rho$ ne peut être nul il est compris entre 0,01 et 1 selon le diamètre du fil de bobinage. Le rapport $C_1/L_1$ est bien plus petit que 1 de (l'ordre de 0,001). De ce fait, le courant primaire $I_1$ devient négligeable (quelques mA)

En d'autres termes, en l'absence de bobine secondaire dans la boucle d'émission formée par la bobine primaire, le courant primaire $I_1$ débité par l'alimentation électrique est faible. En effet, le fait de brancher l'alimentation électrique sur une portion de la bobine primaire permet de créer dans la bobine deux champs électromagnétiques contradictoires. Le premier champ électromagnétique $e_{1'}$ apparait dans le deuxième sous enroulement $L_{1"}$ de la bobine primaire. Ce premier champ électromagnétique génère un deuxième champ électromagnétique dans le premier sous enroulement $L_{1'}$ du au fort courant qui traverse le premier sous enroulement $L_{1'}$. Le deuxième champ électromagnétique s'oppose au premier champ électromagnétique de sorte qu'il élève l'impédance vue par l'alimentation électrique.

Plus le coefficient de qualité Q du circuit primaire est important, plus l'impédance vue par l'alimentation électrique en l'absence de circuit secondaire est élevée. Le coefficient de qualité Q du circuit primaire est défini par :

$$Q = L_1\omega/r_1$$

Avec $L_1$ qui est l'impédance de la bobine primaire
$\omega$ qui est la pulsation de résonnance du circuit primaire
$r_1$ qui est la résistance du circuit primaire symbolisé par $\rho$ dans le calcul précédent.

Cet effet remarquable correspond à la présence d'une force contre électromotrice $e_{1'}$ qui réduit fortement la tension apparente de l'alimentation électrique dans la bobine primaire, donc le courant primaire $I_1$ débité. Tout se passe alors comme si la bobine primaire était couplée avec une bobine secondaire faiblement chargée donc peu consommatrice d'énergie.

De cette façon, l'alimentation électrique peut être branchée en permanence sur le circuit primaire sans qu'elle débite de courant primaire dans le circuit primaire sauf un courant primaire résiduel maitrisé. Plus la résistance $r_1$ du circuit primaire est faible, plus le courant primaire débité en l'absence de circuit secondaire est faible, car le coefficient de qualité Q du circuit en dépend.

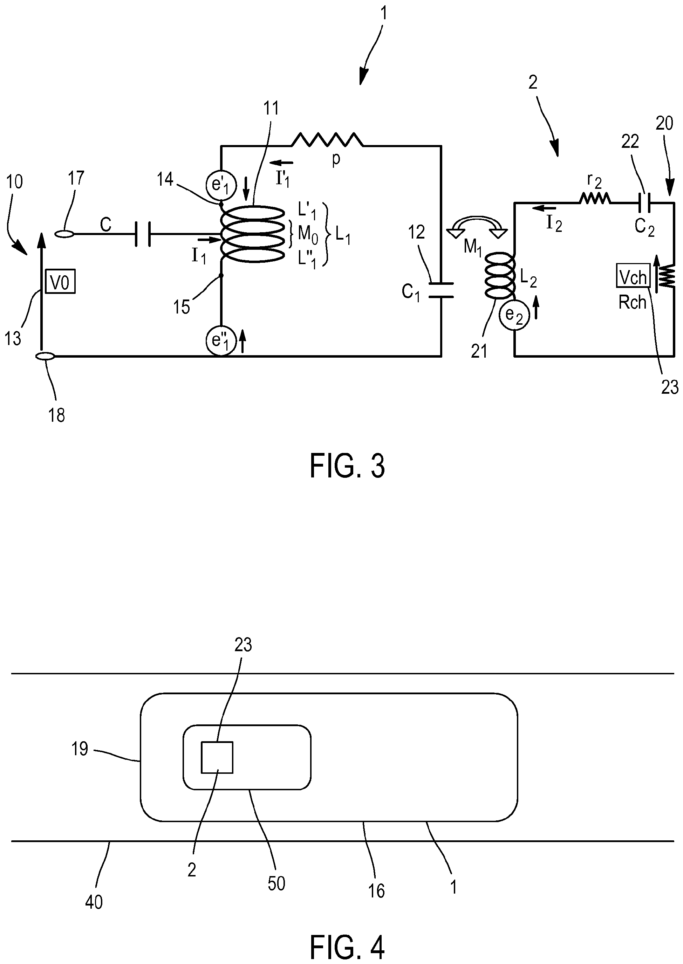

Les figures 3 et 4 représentent schématiquement un système d'alimentation selon un mode de réalisation de l'invention. La figure 3 représente ce système d'alimentation du point de vue électrique, tandis que la figure 4 représente schématiquement ce système d'alimentation dans l'espace, en vue du dessus.

Ce système d'alimentation comporte un dispositif d'alimentation 1 tel que celui décrit en référence aux figures 1 et 2 et un circuit secondaire 2. Le circuit secondaire 2 est disposé sur un véhicule 50. Le circuit secondaire 2 comporte au moins une charge électrique 23 du véhicule. La charge électrique 23 peut par exemple être une batterie électrique et/ou un moteur électrique. Le circuit secondaire 2 comporte également une bobine secondaire 21 et une capacité secondaire 22. La charge 23, la bobine 21 et la capacité 22 sont reliées en série. Le circuit secondaire 20 présente une fréquence de résonnance égale à la fréquence de résonnance du circuit primaire 10.

La surface de la bobine secondaire 21, sa forme, son nombre de spires, le diamètre des fils qui la constituent, dépendent de la puissance transmise souhaitée et de la fréquence utilisée.

Lorsque la bobine secondaire 21 s'approche suffisamment de la bobine primaire 11 pour être couplée avec la bobine primaire 11, le courant primaire I1 débité par l'alimentation électrique augmente et de l'énergie est transférée par induction de la bobine primaire 11 à la bobine secondaire 21. Le circuit secondaire 20 est alors parcouru par un courant secondaire $I_2$ qui est inversement proportionnel à la charge 23.

Le dispositif d'alimentation 1 permet donc d'alimenter une charge d'un véhicule placé dans le champ émis par la bobine primaire 11. On peut notamment envisager de recharger une batterie d'un véhicule électrique, soit pendant qu'il roule, soit pendant qu'il est à l'arrêt.

Pour cela, chaque bobine primaire pourra par exemple former des rails électromagnétiques fixés dans ou sur le sol. Ces bobines primaires pourront être installées soit sur les routes ou dans des zones de recharge à proximité des routes.

Par ailleurs, un même dispositif d'alimentation peut alimenter simultanément plusieurs charges appartenant à plusieurs véhicules se trouvant dans la boucle d'émission dudit dispositif d'alimentation.

On pourrait notamment envisager de réaliser des zones de recharge dans lesquelles les véhicules pourraient s'arrêter pour recharger leurs batteries. Ces zones pourraient par exemple accueillir accepter un ou plusieurs véhicules. La consommation de ces véhicules lors de la recharge sera proportionnelle à leur nombre grâce au fait que la bobine primaire et l'alimentation électrique forment un autotransformateur.

Selon différents modes de réalisation, la surface de la bobine secondaire 21 peut être inférieure, égale ou supérieure à celle de la bobine primaire 11.

Par ailleurs, il n'est pas nécessaire que le couplage soit parfait entre la bobine primaire du dispositif d'alimentation et la bobine secondaire reliée à la charge qu'on veut alimenter pour que le rendement du transformateur formé par le circuit primaire et le circuit secondaire soit bon. En d'autres termes, il n'est pas nécessaire que le coefficient de couplage entre la bobine primaire du dispositif d'alimentation et la bobine secondaire reliée à la charge qu'on veut alimenter soit égal à 1 pour que le rendement du transformateur formé par le circuit primaire et le circuit secondaire soit bon.

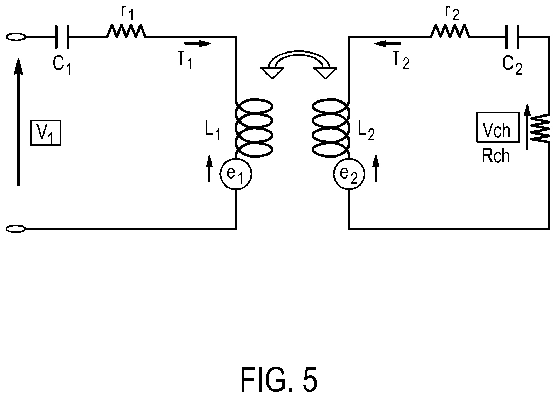

En effet, lorsqu'un circuit secondaire 20 se trouve dans la zone d'émission du circuit primaire 10 alors le circuit primaire 10 peut être modélisé par un circuit en série comportant une bobine primaire d'inductance $L_1$, une capacité de capacitance $C_1$ et une alimentation électrique de tension $V_1$, tandis que le circuit secondaire est également représenté par un circuit série comportant une bobine secondaire d'inductance $L_2$, une capacité de capacitance $C_2$ et une charge de tension $V_{ch}$. Un tel circuit primaire et un tel circuit secondaire sont représentés sur la figure 5.

La force électromotrice générée dans le circuit primaire est donnée par :

$$e_1 = -j\omega M_1 \times I_2$$

La force électromotrice générée dans le circuit secondaire est donnée par :

$$e_2 = -j\omega M_1 \times I_1$$

Le courant $I_1$ dans le circuit primaire est donné par :

$$I_1 = \frac{(V_1 - j\omega M \times I_2)}{\left(j\omega L_1 - j\dfrac{1}{\omega C_1} + r_1\right)}$$

Avec :

$V_1$ la tension aux bornes de l'alimentation électrique ;
$\omega$ la pulsation du courant primaire ($\omega = 2\pi F$)
$M_1$ la mutuelle du couplage entre le circuit primaire et le circuit secondaire
L1 l'inductance de la bobine primaire
C1 la capacitance de la capacité primaire
r1 la résistance de la bobine primaire

Le courant I2 dans le circuit secondaire est donné par :

$$I_2 = \frac{(j\omega M \times I_1)}{\left(j\omega L_2 - \dfrac{1}{j\omega C_2} + r_2 + Rch\right)}$$

Avec :

$\omega$ la pulsationdu courant primaire
$M_1$ l'inductance mutuelle du couplage entre le circuit primaire et le circuit secondaire
$L_2$ l'inductance de la bobine secondaire
$C_2$ la capacitance de la capacité secondaire
$r_2$ la résistance du circuit secondaire
$R_{ch}$ la résistance de la charge

On en déduit que le courant $I_1$ dans le circuit primaire peut également être exprimé comme :

$$I_1 = \frac{V_1\left(j\omega L_2 + \dfrac{1}{j\omega C_2} + r_2 + Rch\right)}{\left(j\omega L_1 + \dfrac{1}{j\omega C_1} + r_1\right)\left(j\omega L_2 + \dfrac{1}{j\omega C_2} + r_2 + Rch\right) + \omega^2 M^2}$$

De même, le courant $I_2$ dans le circuit secondaire peut également être exprimé par :

$$I_2 = \frac{j\omega M \times V_1}{\left(j\omega L_1 + \dfrac{1}{j\omega C_1} + r_1\right)\left(j\omega L_2 + \dfrac{1}{j\omega C_2} + r_2 + Rch\right) + \omega^2 M^2}$$

Sachant que la mutuelle $M_1$ peut être exprimée par :

$$M = k\sqrt{L_1 L_2}\,,$$

On peut calculer la tension $V_{ch}$ dans la charge :

$$VCh_1 = \frac{-V_1 j\omega.k\sqrt{L_1 L_2}.Rch}{\left(j\omega L_1 + \dfrac{1}{j\omega C_1} + r_1\right)\left(j\omega L_2 + \dfrac{1}{j\omega C_2} + r_2 + Rch\right) + \omega^2 M^2}$$

La puissance $P_{ch}$ dans la charge est quant à elle donnée par :

$$Pch = \frac{(V_1\omega.k\sqrt{L_1 L_2}.)^2 Rch}{\left[\left(j\omega L_1 + \dfrac{1}{j\omega C_1} + r_1\right)\left(j\omega L_2 + \dfrac{1}{j\omega C_2} + r_2 + Rch\right) + \omega^2 M^2\right]^2}$$

$$P_0 = \frac{V_1^2\left(j\omega L_2 + \dfrac{1}{j\omega C_2} + r_2 + Rch\right)}{\left(j\omega L_1 + \dfrac{1}{j\omega C_1} + r_1\right)\left(j\omega L_2 + \dfrac{1}{j\omega C_2} + r_2 + Rch\right) + \omega^2 M^2}$$

On en déduit le rendement n du couplage entre le circuit primaire et le circuit secondaire :

$$\eta = \frac{(\omega.k\sqrt{L_1 L_2}.)^2 Rch}{\left[\left(j\omega L_1 + \dfrac{1}{j\omega C_1} + r_1\right)\left(j\omega L_2 + \dfrac{1}{j\omega C_2} + r_2 + Rch\right) + \omega^2 M^2\right]\left(j\omega L_2 + \dfrac{1}{j\omega C_2} + r_2 + Rch\right)}$$

Enfin, à la résonnance si :

$$\omega = \frac{1}{\sqrt{L_1 C_1}} = \frac{1}{\sqrt{L_2 C_2}}$$

Alors le rendement du couplage entre le circuit primaire et le circuit secondaire est donné par :

$$\eta = \frac{(\omega.k\sqrt{L_1 L_2}.)^2 Rch}{\left[(r_1)(+ r_2 + Rch) + \omega^2 M^2\right](r_2 + Rch)} \approx 1$$

Par conséquent, pour maintenir un rendement sensiblement égal à 1 même lorsque le couplage entre la bobine primaire et la bobine secondaire se dégrade, par exemple parce que la bobine primaire et la bobine secondaire s'éloignent l'une de l'autre et/ou qu'elles ne sont pas parfaitement alignées. La fréquence est fixée au départ car elle doit restée en accord avec la résonnance des circuits primaire, secondaire et tertiaire. On choisit la fréquence du courant primaire. On peut ainsi assurer la puissance transmise à la charge par le circuit primaire en optimisant la fréquence du circuit primaire de façon à compenser le fait que le couplage entre la bobine primaire et le bobine secondaire n'est pas parfait.

Ainsi, un aspect de l'invention concerne un procédé d'optimisation de la puissance transmise par le circuit primaire à la charge, le procédé comportant une étape de contrôle de la fréquence du courant primaire. La fréquence du courant primaire est modifiée lorsque le couplage entre la bobine primaire et la bobine secondaire est insuffisant selon les distances inter-bobines pour une application donnée.

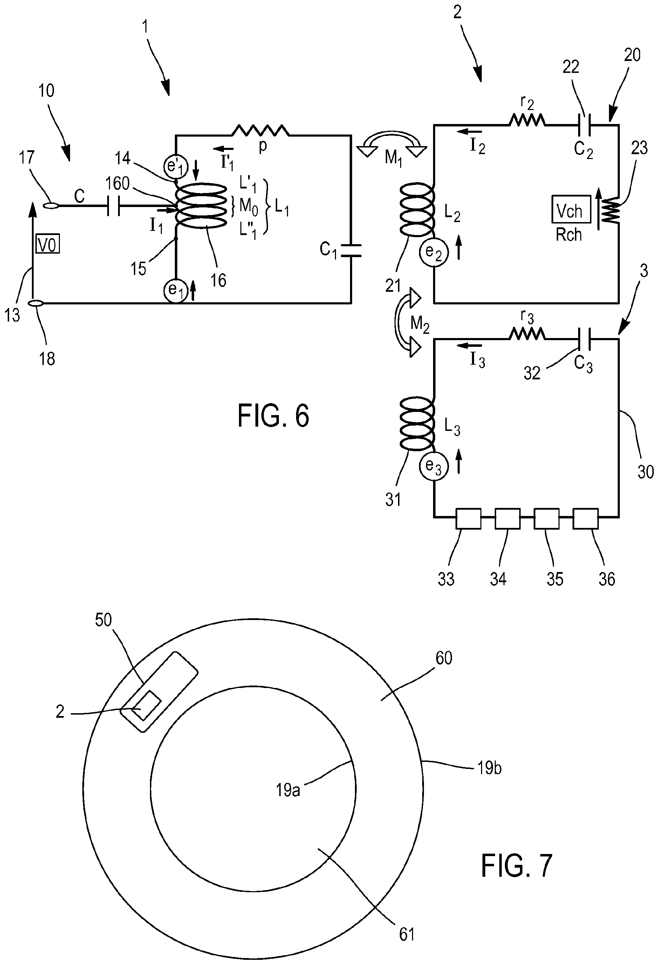

La figure 6 représente un système d'alimentation selon un autre mode de réalisation. Ce mode de réalisation peut être combiné avec ceux décrits en référence aux figures 1 à 5 ou pris isolément.

Le système d'alimentation de la figure 6 comporte :

- un dispositif d'alimentation 1 tel que celui décrit en référence aux figures 1 et 2 et
- un circuit secondaire 2. Le circuit secondaire 2 est disposé sur un véhicule 50. Le circuit secondaire 2 comporte au moins une charge électrique 23 du véhicule. La charge électrique 23 peut par exemple être une batterie électrique et/ou un moteur électrique. Le circuit secondaire 2 comporte également une bobine secondaire 21 et une capacité secondaire 22. La charge 23, la bobine 21 et la capacité 22 sont reliées en série. Le circuit secondaire 20 présente une fréquence de résonnance égale à la fréquence de résonnance du circuit primaire 10.

Le système d'alimentation de la figure 6 comporte également un dispositif de commande 3 de la puissance transférée par le circuit primaire 10 au circuit secondaire 20. Ce dispositif de commande de la puissance transférée comporte un circuit tertiaire 30 comportant :

- une bobine tertiaire 31 d'inductance $L_3$ ;
- une capacité tertiaire 32 de capacitance $C_3$.

Le circuit tertiaire 30 présente une fréquence de résonnance $f_3$ égale à la fréquence de résonnance $f_1$ du circuit primaire 10 et à la fréquence de résonnance $f_2$ du circuit secondaire 20.

Le circuit tertiaire 30 permet de réguler la puissance transmise du circuit primaire au circuit secondaire en modifiant le couplage entre le circuit secondaire 20 et le circuit tertiaire 30.

En effet, la présence de la troisième bobine 31 à une distance de référence de la deuxième bobine 21, lorsque le circuit tertiaire 30 est fermé et que la bobine secondaire 21 et la bobine tertiaire 31 sont parallèles, permet de modifier le courant primaire $I_1$ qui parcourt le circuit primaire 10 et donc la puissance transmise à la charge 23 par le circuit primaire 11. Ainsi, en modifiant le couplage entre la bobine secondaire et la bobine tertiaire, on peut modifier la puissance émise par le circuit primaire et donc la puissance reçue par le circuit secondaire, et ce sans perte de rendement.

En effet, le courant primaire $I_1$ dans le circuit primaire 10 du système d'alimentation de la figure 6 est donné par :

$$I_1 = \frac{V_1 . Z_1 (Z_2 . Z_3 - \omega^2 M_2^2)}{Z_1 . Z_2 (Z_2 . Z_3 - \omega^2 M_2^2) + \omega^2 M_1^2 (Z_2 . Z_3 - \omega^2 M_2^2) - M_2^2 M_1^2 \omega^4}$$

Avec :

$$Z_1 = r_1 + J\omega L_1 + \frac{1}{J\omega C_1}$$

$$Z_2 = r_2 + R_{ch} + J\omega L_2 + \frac{1}{J\omega C_2}$$

$$Z_3 = r_3 + J\omega L_3 + \frac{1}{J\omega C_3}$$

$$M_1 = k_1\sqrt{L_1.L_2}$$

$$M_2 = k_2\sqrt{L_2.L_3}$$

$M_1$ est l'inductance mutuelle du couplage entre le circuit primaire et le circuit secondaire

$M_2$ est l'inductance mutuelle du couplage entre le circuit secondaire et le circuit tertiaire

$r_1$ est la résistance du circuit primaire

$L_1$ est l'inductance de la bobine primaire

$C_1$ est la capacitance de la bobine primaire

$r_2$ est la résistance du circuit secondaire

$L_2$ est l'inductance de la bobine secondaire

$C_2$ est la capacitance de la bobine secondaire

$r_3$ est la résistance du circuit tertiaire

$L_3$ est l'inductance de la bobine tertiaire

$C_3$ est la capacitance de la bobine tertiaire

$\omega$ est la pulsation = $2\pi F$

Lorsque les circuits primaire, secondaire et tertiaire sont accordés, le dénominateur n'étant pas nul, le courant primaire $I_1$ est égal à zéro si la condition ci-dessous est réalisée:

$$I_1 = \frac{V_1.Z_1(Z_2.Z_3 - \omega^2 M_2^2)}{Z_1.Z_2(Z_2.Z_3 - \omega^2 M_2^2) + \omega^2 M_1^2(Z_2.Z_3 - \omega^2 M_2^2) - M_2^2 M_1^2 \omega^4}$$

$$(Z_2.Z_3 - \omega^2 M_2^2) = 0$$

*annule le courant $I_1$*

A la résonnance $Z_2 = R_{ch} + r_2$ et $Z_3 = r_3$ l'équation s'annule donc pour

$$R_{ch}.r_3 = \omega^2.M_2^2$$

Le couplage entre la bobine secondaire et la bobine tertiaire, représenté par la mutuelle $M_2$, est d'autant plus lâche que $R_{ch}$ et $r_3$ sont faibles.

Autrement dit, pour une fréquence du courant primaire donnée, il est donc possible de réguler la puissance transmise à la charge 23 par la simple modification du coefficient $M_2$, c'est-à-dire en modifiant le couplage entre la bobine secondaire et la bobine tertiaire.

Ainsi, lorsque :

- le circuit tertiaire 30 est fermé et que
- la bobine tertiaire 31 est parallèle à la bobine secondaire 21 et que
- la bobine tertiaire 31 se trouve à une distance de référence de la bobine secondaire 21,

alors le circuit tertiaire 30 créé un champ électromagnétique qui s'oppose au champ électromagnétique créé par le circuit secondaire 20, ce qui permet d'annuler le champ électromagnétique apparent au niveau de la bobine secondaire 21. On arrête alors la transmission de puissance entre le circuit primaire 10 et le circuit secondaire 20. Le circuit tertiaire 30 permet donc de placer le véhicule dans la boucle d'émission 19 formée par les spires de la bobine primaire 11 sans qu'il y ait transmission de puissance si on le souhaite.

Au contraire en ouvrant le circuit tertiaire 30, il y a à nouveau transmission de puissance entre le circuit primaire et le circuit secondaire.

Par conséquent, selon un premier mode de réalisation, le dispositif de commande 3 peut comporter des moyens d'ouverture 33 du circuit tertiaire aptes à ouvrir et fermer le circuit tertiaire 30. Ces moyens d'ouverture 33 peuvent par exemple être un interrupteur.

De même, en tournant la bobine tertiaire 31 par rapport à la bobine secondaire 21 de façon à ce que la bobine tertiaire ne soit plus parallèle à la bobine secondaire, on augmente la puissance transmise du circuit primaire au circuit secondaire. Lorsque la bobine tertiaire 31 est perpendiculaire à la bobine secondaire 21, la puissance transmise par le circuit primaire 10 au circuit secondaire 20 est maximale.

Par conséquent, le dispositif de commande 3 peut comporter des moyens d'inclinaison 34 aptes à modifier l'inclinaison de la bobine tertiaire 31 par rapport à la bobine secondaire 21. Ces moyens d'inclinaison 34 comportent par exemple un axe orientable mécaniquement.

On peut également modifier la distance entre la bobine tertiaire et la bobine secondaire pour réguler la puissance transmise du circuit primaire au circuit secondaire.

Par conséquent, le dispositif de commande 3 peut également comporter des moyens de contrôle 35 de la distance entre la bobine tertiaire 31 et la bobine secondaire 21. Ces moyens de contrôle 35 sont agencés pour placer la bobine tertiaire et la bobine secondaire :

- soit à une distance égale à la distance de référence, ou alors
- soit à une distance différente de la distance seuil en fonction de la puissance que l'on veut transmettre entre le circuit primaire et le circuit secondaire.

On peut également modifier la résistance r3 du circuit tertiaire pour modifier la puissance transmise à la charge 23 par le circuit primaire.

Par conséquent, le dispositif de commande 3 peut également comporter des moyens de modification 36 permettant de modifier la résistance r3 du circuit tertiaire. Ces moyens de modification 36 peuvent par exemple comprendre un potentiomètre. Ces moyens de modification 36 sont les plus simples à mettre en oeuvre, mais ils induisent quelques pertes égales à $I_3^2 * r_3$. Par conséquent, il est préférable d'utiliser cette dernière solution en tout ou rien : c'est-à-dire de donner à la résistance r3 du circuit tertiaire soit une valeur nulle, soit une valeur très importante.

Le dispositif de commande 3 peut comporter un ou plusieurs des moyens d'ouverture 33, des moyens d'inclinaison 34, des moyens de contrôle 35 et des moyens de modification 36.

Naturellement l'invention n'est pas limitée aux modes de réalisation décrits en référence aux figures et des variantes pourraient être envisagées sans sortir du cadre de l'invention. Ainsi, les modes de réalisation décrits en référence aux figures 1 à 6 pourraient être combinés selon toutes les combinaisons techniquement possibles.

Par ailleurs, un même système d'alimentation pourrait comprendre plusieurs dispositifs d'alimentation 1. Dans ce cas, selon un premier mode de réalisation, leurs boucles d'alimentation 19 peuvent être placées de façon à être concentriques comme représenté sur la figure 7.

Ainsi, la figure 7 représente un système d'alimentation comportant un premier et un deuxième dispositif d'alimentation tel que celui décrit en référence à la figure 1. Le premier dispositif d'alimentation comporte une première boucle d'émission 19a. Le deuxième dispositif d'alimentation comporte une deuxième boucle d'émission 19b. Chaque boucle d'émission 19a, 19b est formée par une bobine primaire d'un dispositif d'alimentation tel que celui décrit en référence à la figure 1. La première boucle d'émission 19a est située à l'intérieur de la deuxième boucle d'émission 19b. Les deux boucles d'émission 19 sont concentriques. Les deux boucles d'émission sont situées de part et d'autre d'un tronçon de route empruntable par le véhicule, de sorte que le champ électromagnétique émis par les deux boucles d'émission est maximum dans le tronçon de route empruntable par le véhicule et nul à l'intérieur de la première boucle d'émission 19a.

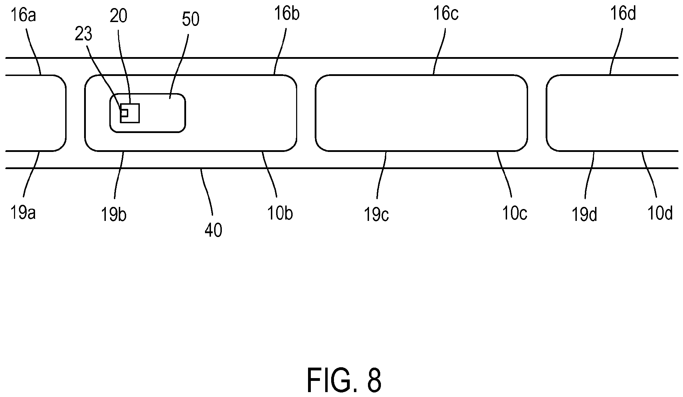

Selon un deuxième mode de réalisation, qui peut être combiné avec le premier, les boucles d'émission 19a, 19b, 19c, 19d peuvent être placées les unes après les autres dans le tronçon de route 40, comme représenté schématiquement sur la figure 8. Dans ce cas, dès qu'un véhicule 50 pourvu d'un circuit secondaire 20 accordé en fréquence avec le circuit primaire 10 entre dans le champ d'émission du circuit primaire 10b, la bobine primaire 16b au-dessous du circuit secondaire 20 émet un champ accru et produit dans la bobine secondaire 20 l'énergie nécessaire à la charge 23 connectée au circuit secondaire 20. Si le véhicule passe de la boucle d'émission 19b à la boucle d'émission 19c, c'est le circuit primaire 10c relié à la boucle d'émission 19c qui consomme du courant et non plus le circuit primaire 10b qui lui arrête de débiter du courant à l'exception d'un courant de fuite.

Le dispositif d'alimentation et le système d'alimentation sont particulièrement avantageux car ils permettent d'alimenter une charge de manière fiable, peu chère et simple. En outre, ils permettent d'alimenter une charge sans être nocifs pour l'environnement, sans émettre de gaz d'échappement, sans bruit, ni émission de gaz à effet de serre.

On pourrait par ailleurs envisager d'équiper les véhicules électriques d'un compteur embarqué permettant de comptabiliser la puissance reçue par la charge par induction. Ce compteur embarqué permettra ainsi de taxer le conducteur, au prorata de sa consommation sur le réseau électrique au prix du KWh.

**Revendications**

1. Dispositif d'alimentation (1) sans contact d'une charge (23), le dispositif comportant un circuit primaire (10) comportant :

   - une bobine primaire (11) agencée pour transférer par induction de l'énergie à une bobine secondaire (21) reliée à la charge (23), la bobine primaire comportant un point intermédiaire (160) situé entre une première (14) et une deuxième borne (15) de la bobine primaire (11),
   - une alimentation électrique (13) apte à émettre un courant primaire ($I_1$), l'alimentation électrique (13) comportant une première borne (17) et un point neutre (18),

   **caractérisé en ce que** la bobine primaire (11) est alimentée par l'intermédiaire d'un conducteur d'entrée (C) au point intermédiaire (160) de façon à former un autotransformateur et **en ce que** la deuxième borne (15) de la bobine primaire (11) est reliée au point neutre (18) de l'alimentation électrique ;
   le circuit primaire (10) comportant une capacité primaire (12) reliée en série entre la première borne (14) de la bobine primaire (11) et le point neutre (18).

2. Dispositif d'alimentation selon la revendication précédente, dans lequel l'alimentation électrique (13) est configurée de façon à ce que le courant primaire ($I_1$) soit alternatif de forme carrée ou rectangulaire.

3. Dispositif selon l'une des revendications précédentes, dans lequel l'alimentation électrique (13) est configurée de façon à ce que le courant primaire ($I_1$) présente une fréquence égale à la fréquence de résonance du circuit primaire (10).

4. Système d'alimentation sans contact d'une charge, le système d'alimentation comportant :

   - un dispositif d'alimentation (1) selon l'une des revendications précédentes,
   - un circuit secondaire (20) relié à la charge (23), le circuit secondaire (20) comportant une capacité secondaire (22) et une bobine secondaire (21), le circuit secondaire (20) étant accordé en fréquence avec le circuit primaire (10).

5. Système d'alimentation selon la revendication précédente, comportant en outre un dispositif de commande de la puissance transférée par le dispositif d'alimentation (1) à la charge (23), le dispositif de commande comportant un circuit tertiaire (30) comportant une capacité tertiaire (32) et une bobine tertiaire (31), le circuit tertiaire (30) présentant une fréquence de résonance tertiaire égale à la fréquence de résonance primaire.

6. Système d'alimentation selon la revendication précédente, dans lequel la bobine tertiaire (31) est disposée par rapport à la bobine secondaire (21) à une distance initiale telle que lorsque la bobine tertiaire (31) et la bobine secondaire (21) sont parallèles et que le circuit tertiaire (30) est fermé, le champ électromagnétique émis par la bobine primaire (11) dans le circuit secondaire (20) est annulé.

7. Système d'alimentation selon l'une des revendications 5 ou 6, dans lequel le dispositif de commande comporte en outre des moyens de commande de l'inclinaison de la bobine tertiaire (31) par rapport à la bobine secondaire (21), les moyens de commande étant aptes à incliner la bobine tertiaire (31) par rapport à la bobine secondaire (21) entre une position dans laquelle la bobine tertiaire (31) est parallèle à la bobine secondaire (21) et une position dans laquelle la bobine tertiaire (31) est perpendiculaire à la bobine secondaire (21).

8. Système d'alimentation selon l'une des revendications 5 à 7, dans lequel le dispositif de commande comporte en outre des moyens d'ouverture aptes à ouvrir et fermer le circuit tertiaire (30).

9. Système d'alimentation selon l'une des revendications 5 à 8, dans lequel le circuit tertiaire (30) comporte une résistance variable (33) reliée en série à la bobine tertiaire (31) et à la capacité tertiaire (32), le dispositif de commande comportant des moyens de commande de la résistance variable.

**Patentansprüche**

1. Kontaktlose Versorgungsvorrichtung (1) einer Last (23), wobei die Vorrichtung einen primären Schaltkreis (10) umfasst, umfassend:

- eine primäre Spule (11), die angeordnet ist, um per Induktion Energie auf eine sekundäre Spule (21) zu übertragen, die an die Last (23) angeschlossen ist, wobei die primäre Spule einen Zwischenpunkt (160) umfasst, der sich zwischen einem ersten (14) und einem zweiten Anschluss (15) der primären Spule (11) befindet;
- eine Stromversorgung (13), die geeignet ist, einen primären Strom ($I_1$) auszugeben, wobei die Stromversorgung (13) einen ersten Anschluss (17) und einen Nullpunkt (18) umfasst,

**dadurch gekennzeichnet, dass** die primäre Spule (11) mittels eines Eingangsleiters (C) am Zwischenpunkt (160) derart versorgt ist, dass ein Autotransformator geformt wird und dass der zweite Anschluss (15) der primären Spule (11) am Nullpunkt (18) der Stromversorgung angeschlossen ist; wobei der primäre Schaltkreis (10) eine primäre Kapazität (12) umfasst, die in Serie zwischen dem ersten Anschluss (14) der primären Spule (11) und dem Nullpunkt (18) angeschlossen ist.

2. Versorgungsvorrichtung gemäß dem voranstehenden Anspruch, bei dem die Stromversorgung (13) derart konfiguriert ist, dass der primäre Strom ($I_1$) ein Wechselstrom in quadratischer oder rechteckiger Form ist.

3. Vorrichtung gemäß irgendeinem der voranstehenden Ansprüche, bei dem die Stromversorgung (13) derart konfiguriert ist, dass der primäre Strom ($I_1$) eine Frequenz aufweist, die gleich der Resonanzfrequenz des primären Schaltkreises (10) ist.

4. Kontaktloses Versorgungssystem einer Last, wobei das Versorgungssystem umfasst:

- eine Versorgungsvorrichtung (1) gemäß einem der voranstehenden Ansprüche,
- einen sekundären Schaltkreis (20), der an die Last (23) angeschlossen ist, wobei der sekundäre Schaltkreis (20) eine sekundäre Kapazität (22) und eine sekundäre Spule (21) aufweist, wobei der sekundäre Schaltkreis (20) in Frequenz mit dem primären Schaltkreis (10) abgestimmt ist.

5. Versorgungssystem gemäß dem voranstehenden Anspruch, umfassend darüber hinaus eine Steuervorrichtung der von der Versorgungsvorrichtung (1) auf die Last (23) übertragenen Leistung, wobei die Steuervorrichtung einen tertiären Schaltkreis (30) umfasst, der eine tertiäre Kapazität (32) und eine tertiäre Spule (31) umfasst, wobei der tertiäre Schaltkreis (30) eine tertiäre Resonanzfrequenz aufweist, die gleich der primären Resonanzfrequenz ist.

6. Versorgungssystem gemäß dem voranstehenden Anspruch, bei dem die tertiäre Spule (31) im Verhältnis zur sekundären Spule (21) in einer ursprünglichen Entfernung derart angeordnet ist, dass, wenn die tertiäre Spule (31) und die sekundäre Spule (21) parallel sind und der tertiäre Schaltkreis (30) geschlossen ist, das von der primären Spule (11) im sekundären Schaltkreis (20) ausgegebene elektromagnetische Feld annulliert ist.

7. Versorgungssystem gemäß irgendeinem der Ansprüche 5 oder 6, bei dem die Steuervorrichtung darüber hinaus Steuermittel der Neigung der tertiären Spule (31) im Verhältnis zur sekundären Spule (21) umfasst, wobei die Steuermittel geeignet sind, die tertiäre Spule (31) im Verhältnis zur sekundären Spule (21) zwischen einer Position, in der die tertiäre Spule (31) parallel zur sekundären Spule (21) ist, und einer Position, in der die tertiäre Spule (31) lotrecht zur sekundären Spule (21) ist, zu neigen.

8. Versorgungssystem gemäß irgendeinem der Ansprüche 5 bis 7, bei dem die Steuervorrichtung darüber hinaus Öffnungsmittel umfasst, die geeignet sind, den tertiären Schaltkreis (30) zu öffnen und zu schließen.

9. Versorgungssystem gemäß irgendeinem der Ansprüche 5 bis 8, bei dem der tertiäre Schaltkreis (30) einen variablen Widerstand (33) umfasst, der in Serie an die tertiäre Spule (31) und an die tertiäre Kapazität (32) angeschlossen ist, wobei die Steuervorrichtung Steuermittel des variablen Widerstandes umfasst.

**Claims**

1. A device (1) for contactessly supplying a load (23), the device including a primary circuit (10) including:

- a primary coil (11) arranged to transfer energy by induction to a secondary coil (21) connected to the load (23), the primary coil including an intermediate point (160) located between first (14) and second (15) terminals of the primary coil (11),

- an electrical power supply (13) able to emit a primary current ($I_1$), the electrical power supply (13) including a first terminal (17) and a neutral point (18),

**characterised in that** the primary coil (11) is supplied through an input conductor (C) to the intermediate point (160) so as to form an autotransformer and **in that** the second terminal (15) of the primary coil (11) is connected to the neutral point (18) of the electrical power supply;

the primary circuit (10) including a primary capacitance (12) connected in series between the first terminal (14) of the primary coil (11) and the neutral point (18).

2. The power supply device according to the preceding claim, wherein the electrical power supply (13) is configured such that the primary current ($I_1$) is square or rectangular shaped A.C current.

3. The power supply device according to one of the preceding claims, wherein the electrical power supply (13) is configured such that the primary current ($I_1$) has a frequency equal to the resonance frequency of the primary circuit (10).

4. A system for contactessly supplying a load, the power supply system including:

   - a power supply device (1) according to one of the preceding claims,
   - a secondary circuit (20) connected to the load (23), the secondary circuit (20) including a secondary capacitance (22) and a secondary coil (21), the secondary circuit (20) being frequency-tuned with the primary circuit (10).

5. The power supply system according to the preceding claim, further including a controlling device for controlling power transferred by the power supply device (1) to the load (23), the controlling device including a tertiary circuit (30) including a tertiary capacitance (32) and a tertiary coil (31), the tertiary circuit (30) having a tertiary resonance frequency equal to the primary resonance frequency.

6. The power supply system according to the preceding claim, wherein the tertiary coil (31) is disposed relative to the secondary coil (21) at an initial distance such that when the tertiary coil (31) and the secondary coil (21) are parallel and that the tertiary circuit (30) is closed, the electromagnetic field emitted by the primary coil (11) in the secondary circuit (20) is cancelled.

7. The power supply system according to one of claims 5 and 6, wherein the controlling device further includes means for controlling the tilt of the tertiary coil (31) relative to the secondary coil (21), the controlling means being able to tilt the tertiary coil (31) relative to the secondary coil (21) between a position in which the tertiary coil (31) is parallel to the secondary coil (21) and a position in which the tertiary coil (31) is perpendicular to the secondary coil (21).

8. The power supply system according to one of claims 5 to 7, wherein the controlling device further includes opening means able to open and close the tertiary circuit (30).

9. The power supply system according to one of claims 5 to 8, wherein the tertiary circuit (30) includes a variable resistance (33) connected in series to the tertiary coil (31) and to the tertiary capacitance (32), the controlling device including means for controlling the variable resistance.

FIG. 1

FIG. 2

FIG. 3

FIG. 4

FIG. 5

FIG. 6

FIG. 7

FIG. 8

**EP 3 065 252 B1**

## RÉFÉRENCES CITÉES DANS LA DESCRIPTION

**Documents brevets cités dans la description**

- FR 2998427

- FR 2947114